# EUROPÄISCHE PATENTSCHRIFT

(11) **EP 2 207 979 B1**
(45) Veröffentlichungstag und Bekanntmachung des Hinweises auf die Patenterteilung: **17.08.2011**
(21) Anmeldenummer: 08802665.3
(22) Anmeldetag: 26.09.2008
(51) Int. Cl.: F16D 57/04

(54) **HYDRODYNAMISCHE MASCHINE, INSBESONDERE HYDRODYNAMISCHER RETARDER**
HYDRODYNAMIC MACHINE, IN PARTICULAR HYDRODYNAMIC RETARDER
MACHINE HYDRODYNAMIQUE, NOTAMMENT RETARDATEUR HYDRODYNAMIQUE

(30) Priorität: 17.12.2007 DE 102007060764
(43) Veröffentlichungstag der Anmeldung: 21.07.2010
(73) Patentinhaber: Voith Patent GmbH, 89522 Heidenheim (DE)
(72) Erfinder: ADAMS, Werner, 74564 Crailsheim (DE)
(74) Vertreter: Dr. Weitzel & Partner
(86) Internationale Anmeldenummer: PCT/EP2008/008216
(87) Internationale Veröffentlichungsnummer: WO 2009/077021

(56) Entgegenhaltungen:
- DE-B3- 10 338 010
- FR-E- 71 468
- GB-A- 728 553
- GB-A- 736 127

## Beschreibung

Die Erfindung betrifft eine hydrodynamische Maschine, insbesondere einen hydrodynamischen Retarder nach dem Oberbegriff des Anspruchs 1. Sie ist jedoch auch bei einer hydrodynamischen Kupplung anwendbar.

Hydrodynamische Retarder und hydrodynamische Kupplungen unterscheiden sich dadurch von einem hydrodynamischen Wandler, dass sie nur zwei Schaufelräder aufweisen, die miteinander einen torusförmigen Arbeitsraum ausbilden. Während bei einer hydrodynamischen Kupplung beide Schaufelräder in dieselbe Drehrichtung umlaufen, ist bei einem hydrodynamischen Retarder das dem Pumpenrad gegenüberstehende Schaufelrad stationär oder läuft bei einem sogenannten Gegenlaufretarder entgegengesetzt zu dem Pumpenrad um. Bei der hydrodynamischen Kupplung bewegt sich dabei das sogenannte Turbinenrad mit einer Drehzahl, die kleiner ist als die Drehzahl des Pumpenrades, da zur Drehmomentübertragung von dem Pumpenrad auf das Turbinenrad ein Schlupf zwischen den beiden Schaufelrädern erforderlich ist.

Hydrodynamische Maschinen der genannten Art sind in einer Vielzahl von Ausführungsformen entwickelt worden. Während sie zunächst ausschließlich mit dem Arbeitsmedium Öl betrieben wurden, sind in jüngerer Zeit auch hydrodynamische Retarder mit Wasser als Arbeitsmedium vorgeschlagen worden, die beispielsweise unmittelbar im Fahrzeugkühlkreislauf angeordnet sind. Das gewählte Arbeitsmedium hat einen Einfluss auf die Leistung der hydrodynamischen Maschine, beziehungsweise auf das vom Pumpenrad auf das Turbinenrad übertragene Drehmoment sowie auf die Temperatur, die durch die Reibung des Fluids entsteht. Um bei Retardern eine besonders hohe Bremswirkung zur Verfügung stellen zu können, soll die übertragene Leistung beziehungsweise das übertragene Moment möglichst groß sein, was sich in einer großen Leistungszahl λ ausdrückt. Die Leistungszahl λ ist dem Fachmann für hydrodynamische Maschinen bekannt und beispielsweise in Dubbel, Taschenbauch für den Maschinenbau, angegeben.

Zur Erhöhung der Leistungszahl einer hydrodynamischen Maschine wurde bereits in der nicht vor veröffentlichten Patentanmeldung DE 10 2007 060 764.6 vorgeschlagen, einen in Radialrichtung verlaufenden Einlasskanal im Pumpenrad auszubilden, der sich senkrecht oder winklig zur Drehachse der hydrodynamischen Maschine erstreckt. Eine Befüllung aus der Toruswand heraus wurde allerdings bisher nicht ohne Fremddruck angewendet, da besonders bei einem schrägbeschaufelten Kreislauf und bei großem Schlupf der Gegendruck an der Toruswand am größten ist. Die Meridiangeschwindigkeit des Arbeitsmediums ist dann ein Vielfaches der Umfangsgeschwindigkeit und der Rotationsdruck aus der Fliehbeschleunigung der Meridianströmung ist relativ groß.

Die Befüllung von schrägbeschaufelten hydrodynamischen Kreisläufen erfolgt deshalb bisher auf nur zweierlei Arten. Steht ein hoher Zulaufdruck zur Verfügung, erfolgt die Befüllung durch den inneren oder äußeren Spalt zwischen Pumpen und Turbinenrad. Anderenfalls geschieht dies über geschlossene Kanäle, die bis in die Torusmitte verlaufen. Ein hoher Zulaufdruck muss dabei aufwändig erzeugt werden und Kanäle in die Torusmitte kosten Geld und Leistungszahl λ. Die im Dokument FR 71468Eoffenbarten Merkmale sind im oberbegriff von Anspruch 1 zusammengefasst. Zum weiteren druckschriltlichen stand der Technik wird und GB 728 553A und GB 736 127 A verwiesen. Es ist Aufgabe der vorliegenden Erfindung, eine hydrodynamische Maschine und insbesondere einen hydrodynamischen Retarder anzugeben, bei der oder bei dem die Leistungs- bzw. Momentenübertragung von einem angetriebenen Primärrad auf ein gegenüberstehendes Sekundärrad auf einfache, effiziente und kostengünstige Art und Weise verbessert wird.

Diese Aufgabe wird durch eine hydrodynamische Maschine mit den kennzeichnenden Merkmalen des Anspruchs 1 gelöst. Die abhängigen Ansprüche beschreiben besonders vorteilhafte und zweckmäßige Ausgestaltungen der Erfindung.

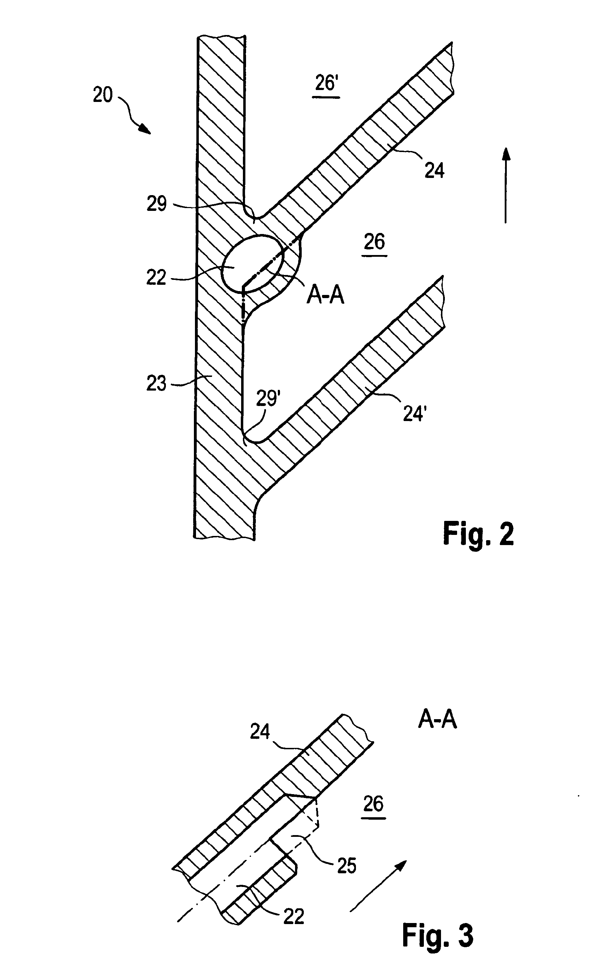

Die Erfindung geht dabei von der Erkenntnis aus, dass der Rotationsdruck über die Toruswand hinweg nicht gleichmäßig groß ist, insbesondere bei einer schrägbeschaufelten hydrodynamischen Maschine. Bei einer solchen schrägbeschaufelten hydrodynamischen Maschine, wie sie die vorliegende Erfindung gemäß einer Ausführungsform betrifft, verlaufen die Schaufeln des Primärrades und/oder des Sekundärrades in Ebenen, welche winklig, das heißt nicht senkrecht, zu einer Ebene, die durch den Trennspalt zwischen Primärrad und Sekundärrad gebildet wird, stehen. Solche schrägbeschaufelten hydrodynamischen Maschinen sind dem Fachmann bekannt und werden später noch mit Bezug auf die Figur 2 dargestellt.

Aufgrund der Schrägbeschaufelung und der daraus folgenden Schrägstellung der Meridianströmung liegt die Toruswand an der nicht beaufschlagten Seite einer Schaufel radial weiter innen und erfährt somit einen geringeren Rotationsdruck. Die Linien gleichen Druckes verlaufen in der Tendenz senkrecht zu den Schaufelflächen. Zum anderen wird die Strömung im Rotor vom Primärrad aus gesehen radial nach außen geführt und muss daher an Umfangsdrehsinn (Drall) zunehmen. Nach dem Gesetz der freien Strömung jedoch würde die Strömung beim radialen 'nach außen Strömen' aber an Umfangsdrehsinn abnehmen. Dieser Effekt erhöht den Druck auf der Seite der 'schiebenden Schaufel' und die Linien gleichen Druckes verlaufen nicht mehr senkrecht zu den Schaufelflächen, sondern neigen sich noch weiter zur Toruswand hin.

Dies wird in einem Rotor der hydrodynamischen Maschine zu Gunsten der Erfindung genutzt, indem der wenigstens eine Einlasskanal so geführt ist, dass er sich in das besonders druckarme Gebiet hinein öffnet, das direkt hinter einer Schaufel in dem Arbeitsraum liegt (in Drehrichtung des Primärrades auf der der Drehrichtung abgewandten Seite der Schaufel), und/oder bezogen auf die Radialrichtung der hydrodynamischen Maschine auf einem Radius im Bereich der Toruswand mündet, der im Bereich der Mitte oder radial außerhalb der Mitte zwischen dem Außenradius und dem Innenradius der Schaufel des Primärrades liegt. Im Bereich der Toruswand bedeutet dabei bei einer Mündung im Bereich der Mitte zwischen dem Außenradius und dem Innenradius der Schaufel in Axialrichtung der hydrodynamischen Maschine außerhalb des Trennspaltes zwischen Primärrad und Sekundärrad, insbesondere im Bereich des Schaufelradbodens an dem axialen Ende der Schaufel, welches dem freien Ende der Schaufel abgewandt ist. Bei einer Mündung im Bereich des Außenradius oder auf dem Außenradius der Schaufel liegt die Mündung hingegen in etwa oder genau im Trennspalt.

Dadurch lässt sich eine Befüllung des Arbeitsraums mit großem Durchsatz und ohne Fremddruck realisieren.

Ausgehend von der Erkenntnis, dass der Rotationsdruck aus der Fliehbeschleunigung der Meridianströmung durch die Umlenkung des Arbeitsmediums am Radius der Toruswand entsteht, kann ein Gebiet relativ geringen Druckes im Torus dabei auch durch gezielte Gestaltung des Torus und/oder der Beschaufelung erzeugt werden. Ein Gebiet relativ geringen Druckes im Torus kann deshalb dadurch erzeugt werden, dass eine jeweilige Schaufel und/oder die Toruswand des Primärrades im Bereich der Mündung eines Einlasskanals so weitgehend radienfrei oder radienarm ausgestaltet sind bzw. ist, dass sich in diesem Bereich eine im wesentlichen hindernisfreie, gradlinig verlaufende Strömung ausbildet. Dadurch wird die Umlenkung mittels einer geraden Strecke unterbrochen, durch welche der sogenannte Venturi-Effekt der vorbeistreichenden Meridianströmung am Besten zur Wirkung kommt. Die gerade Strecke kann verlängert werden, indem die Radien an anderen Stellen um so enger gewählt werden.

Ein zwischen jeweils zwei Schaufeln gebildeter Schaufelraum kann dabei sinngemäß als für sich abgeschlossener Strömungskanal betrachtet werden. Das heißt aber, dass eine relative Erweiterung seines Strömungsquerschnittes eine Zone relativen Unterdruckes erzeugen wird. Bevorzugt wird dies dadurch erreicht, dass die Schaufeln und/oder die Toruswand des Primärrades so gestaltet und/oder ausgerichtet sind bzw. ist, dass wenigstens ein durch gegenüberliegende Schaufeln und die dazwischenliegende Toruswand gebildeter Schaufelraum einen Strömungsquerschnitt aufweist, der gegenüber dem Strömungsquerschnitt eines benachbarten Schaufelraums enger oder weiter ist. Eine solche Gestaltung unterstützt das Zuströmen des Arbeitsmediums in den Schaufelkanal und damit in den Torusraum. Dies kann prinzipiell in jedem Schaufelraum erfolgen.

Die (relative) Vergrößerung des Strömungsquerschnittes kann alternativ oder zusätzlich auch dadurch erfolgen, indem in Blickrichtung der Drehachse die Vorderkante einer Schaufel so ausgerichtet ist, dass ihre gedachte Verlängerung tangential an einem ersten Kreis um die Drehachse anliegt, und die Vorderkante einer benachbarten Schaufel so ausgerichtet ist, dass ihre gedachte Verlängerung tangential an einem zweiten Kreis um die Drehachse anliegt, und durch Kreuzen bzw. nicht Kreuzen der beiden Verlängerungen vor einem Berührungspunkt mit dem Kreis ein Strömungsquerschnitt entsteht, der im Vergleich zu einem Strömungsquerschnitt enger bzw. weiter ist, der bei jeweils durch die Drehachse verlaufenden Verlängerungen entstehen würde. Dadurch wird beispielsweise die Fluchtrichtung jeder zweiten Schaufel anders, d.h. jede geradzahlige Schaufel hat einen anderen Fluchtwinkel als jede ungeradzahlige Schaufel. Somit erfährt jeder zweite oder x-te Schaufelraum in Flussrichtung des Arbeitsmediums eine relative Erweiterung oder Verstärkung der V-Form, während die anderen Schaufelräume in Flussrichtung eine relative Verengung erfahren.

Eine besonders starke Änderung des Strömungsquerschnitts über die Schaufelräume hinweg wird dadurch erreicht, dass der Durchmesser des zweiten Kreises gleich groß oder größer ist als der Durchmesser des ersten Kreises. Die am zweiten Kreis ausgerichtete Schaufel verengt dabei den entsprechenden Strömungsquerschnitt in dem Maß, in dem der zweite Kreis größer als der erste Kreis ist.

Wenn die in Umfangsrichtung aufeinander folgenden Schaufelräume abwechselnd enge und weite Strömungsquerschnitte aufweisen, lässt sich eine Schwingungsanregung des Rotors unterdrücken und damit sein akustisches Verhalten verbessern. Zudem werden Kennliniensprünge des Rotors vermieden. Dies gilt insbesondere auch für ein geschraubtes Profil. Ein solches geschraubtes Profil ist ein Profil, das im Gussverfahren, insbesondere Druckgussverfahren, herstellbar ist, wobei das Schaufelrad ohne Zerstören der Gießform drehentformbar ist.

Der Saugeffekt und die damit verbundene Leistungssteigerung der hydrodynamischen Maschine ist dabei am größten, wenn der wenigstens eine Einlasskanal für das Arbeitsmedium in einen jeweiligen Schaufelraum mit weitem Strömungsquerschnitt führt. Auch ist es möglich, dass der Einlasskanal an einer Stelle im Arbeitsraum mündet, an welcher ein durch in Drehrichtung des Primärrads gegenüberliegende Schaufeln und die dazwischenliegende Toruswand gebildeter Schaufelraum einen Strömungsquerschnitt aufweist, der sich gegenüber dem Strömungsquerschnitt eines benachbarten Schaufelraums, welcher insbesondere frei von einer Mündung eines Einlasskanals ist, relativ stärker erweitert. Diese relativ stärkere Erweiterung kann lokal begrenzt sein oder sich über den gesamten Schaufelraum des Primärrades fortsetzen. Sind alle sich relativ erweiternden Schaufelkanäle mit Einlasskanälen versorgt, ist eine umfassende Versorgung mit Arbeitsmedium gewährleistet.

Die Leistung kann noch dadurch gesteigert werden, dass das Primärrad eine rückenseitige Beschaufelung aufweist, die so gestaltet und/oder ausgerichtet ist, dass bei Rotation des Primärrades ein in dessen Umgebung befindliches Arbeitsmedium in Bewegung versetzt und dem wenigstens einen Einlasskanal zugeführt wird. Dies entspricht einer druckbeaufschlagten Zufuhr des Arbeitsmediums, die allerdings keine zusätzliche Pumpe benötigt.

Eine weitere Leistungssteigerung ist möglich, wenn der wenigstens eine Einlasskanal winklig zu der Drehachse orientiert ist und insbesondere hinsichtlich seiner Arbeitsmediumführung in Radialrichtung von innen nach außen verläuft. Durch die auf das Arbeitsmedium wirkende Zentrifugalkraft wird dessen Zufuhr in den Arbeitsraum verbessert. Gleichzeitig lassen sich derart angeordnete Kanäle besser fertigen, da eine Bearbeitung des Rotors von schräg innen möglich ist. Aus Stabilitätsgründen ist es bevorzugt, wenn der wenigstens eine Einlasskanal in der Basis einer Schaufel verläuft. Diese Basis weist in der Regel eine ausreichende Stärke auf, um den Kanal ohne Festigkeitseinbußen des Rotors aufzunehmen. Zudem hält sich die Strömungsbeeinflussung durch Anbringung des Kanals an dieser Stelle in Grenzen bzw. kann ganz vermieden werden. Die Basis könnte auch als Schaufelfuß bezeichnet werden.

Die vorliegende Erfindung wird im Folgenden anhand von Ausführungsbeispielen unter Bezugnahme auf die beiliegenden Figuren näher erläutert. Gleiche oder gleichwirkende Teile sind mit gleichen Bezugsziffern versehen. Es zeigen:
- Figur 1: einen Teil einer erfindungsgemäßen hydraulischen Maschine in einem Schnitt entlang der Drehachse mit einem darin angeordneten Primärrad;
- Figur 2: einen Teil des Primärrades der Figur 1 in einem Schnitt senkrecht zu den darin verlaufenden Schaufeln;
- Figur 3: die Mündung des Einlasskanals im Schnitt A-A der Figur 2 in dem druckarmen Gebiet des Schaufelraums;
- Figur 4: eine jeweilige Ausrichtung der umlaufenden Schaufeln in dem Primärrad der Figur 1, und
- Figur 5: eine alternative Ausrichtung der umlaufenden Schaufeln in dem Primärrad der Figur 1.

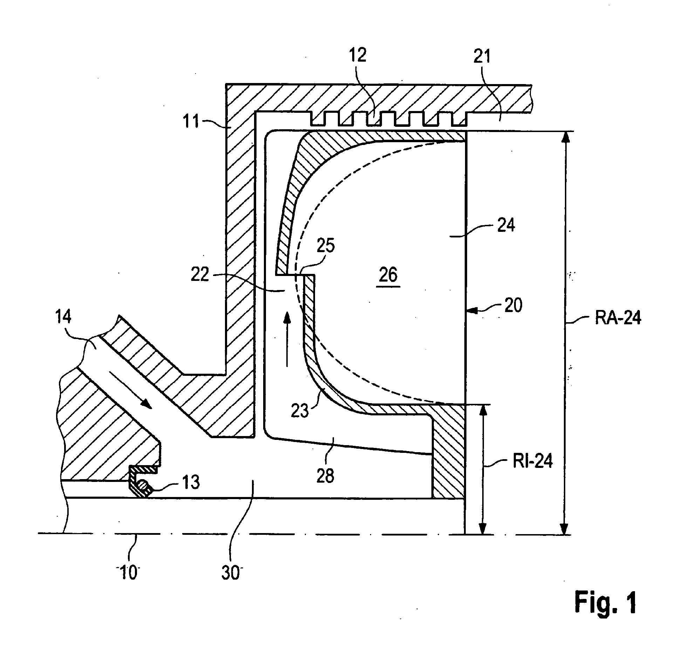

Die Figur 1 zeigt einen Teil einer erfindungsgemäßen hydraulischen Maschine in einem Schnitt entlang der Drehachse 10 mit einem darin angeordneten Primärrad 20. Das Primärrad 20 ist dabei in einem Gehäuse 11 der Maschine gelagert, das eine Spaltabdichtung 12 gegen die Außenseite des Primärrades 20 vorsieht. Zwischen Drehachse 10 und Gehäuse 11 ist zudem eine Axialdichtung 13 angebracht. Über einen Zulauf 14 wird ein Arbeitsmedium 30 in den so geschaffenen Raum eingebracht (in Pfeilrichtung), das in den torusförmigen Arbeitsraum 21 der Maschine über einen Einlasskanal 22 in der Toruswand 23 des Primärrades 20 gesogen wird, sobald dieses rotiert. Der Einlasskanal 22 ist radial von innen nach außen laufend in der Toruswand 23 angebracht, um die Zufuhr des Arbeitsmediums 30 zentrifugal zu unterstützen. Der Einlasskanal 22 mündet ungefähr auf der halben Höhe zwischen Außendurchmesser RA-24 (Radius Außen) und Innenradius RI-24 (Radius Innen) des Primärrades 20 und dabei in Bewegungsrichtung des Primärrades 20 hinter einer darin angeordneten Schaufel 24. In diesem Gebiet herrscht bei Rotation des Primärrades ein relativer Unterdruck, so dass keine druckbeaufschlagte Zufuhr des Arbeitsmediums 30 nötig ist. Die Mündung 25 des Einlasskanals 22 ist zudem in einer radienfreien, geraden Strecke im Schaufelraum 26 angeordnet, um dort den Venturi-Effekt der vorbeistreichenden Strömung voll auszunutzen. Zum Vergleich der erfindungsgemäßen Konturführung ist eine herkömmliche Toruskontur gestrichelt angedeutet, die über keine solche radienfreie Strecke verfügt. Beide erfindungsgemäße Maßnahmen, die Führung des Einlasskanals 22 in ein möglichst druckarmes Gebiet, und die Gestaltung der Toruswand 23 und/oder der Schaufeln 24, 24' können gemeinsam wie hier gezeigt, oder auch alternativ zueinander eingesetzt werden, um eine Leistungssteigerung der Maschine durch bessere Befüllung zu erzielen.

In der Ausführungsform der erfindungsgemäßen Maschine gemäß Figur 1 unterstützt eine rückenseitige Beschaufelung 28 des Primärrades 20 die Zufuhr des Arbeitsmediums 30. Diese Beschaufelung 28 ist so gestaltet und angebracht, dass das Arbeitsmedium 30 dem Einlasskanal 22 bei Rotation des Primärrades 20 zugeführt wird. Eine solche Beschaufelung kann, muss aber nicht vorgesehen sein, um eine ausreichende Zufuhr von Arbeitsmedium zu gewährleisten.

Die Figur 2 zeigt einen Teil des Primärrades 20 der Figur 1 in einem Schnitt senkrecht zu den darin verlaufenden Schaufeln 24, 24'. Aus dieser Figur ist die Führung des Einlasskanals 22 für das Arbeitsmedium 30 in einer Basis 29, 29' der Schaufeln 24, 24' zu entnehmen. Durch diese Führung des Kanals 22 bleibt die Stabilität des Primärrades 20 erhalten, da sich zu seiner Aufnahme genügend Material zwischen Schaufeln 24, 24' und Toruswand 23 befindet. Die Bewegungsrichtung des Primärrades 20 ist durch den Pfeil gekennzeichnet. Das schon im Schaufelraum 26 beziehungsweise 26' als Teil des Arbeitsraums befindliche Arbeitsmedium strömt entlang der Toruswand 23 des Primärrades 20 bei der gezeigten Darstellung aus der Zeichenebene heraus. Die druckarme Zone im Torus eines jeweiligen Schaufelraums 26, 26' befindet sich im Bereich der Oberfläche jeder Schaufel 24, 24', welcher der Bewegungsrichtung abgewandt ist.

Wie man sieht, handelt es sich bei dem in der Figur 2 gezeigten Primärschaufelrad um ein schrägbeschaufeltes Schaufelrad, da die Schaufeln 24, 24' nicht senkrecht, sondern geneigt auf dem Schaufelradboden beziehungsweise der Toruswand 23 stehen.

Die Figur 3 zeigt die Mündung 25 des Einlasskanals 22 im Schnitt A-A der Figur 2 in dem druckarmen Gebiet des Schaufelraums 26. Aus Gründen der einfachen Fertigung ist der Einlasskanal 22 dabei als Bohrung in der Schaufel 24 ausgeführt. Denkbar ist natürlich auch eine Herstellung im des Kanals 22 im Gießverfahren, die aber deutlich teurer sein wird. Durch den Venturi-Effekt des über eine lange gerade Strecke an der Mündung 25 vorbeistreichenden Arbeitsmediums (in Pfeilrichtung) wird ein Sog auf das Arbeitsmedium 30 ausgeübt, der seinen Eintritt in den Schaufelraum 26 fördert.

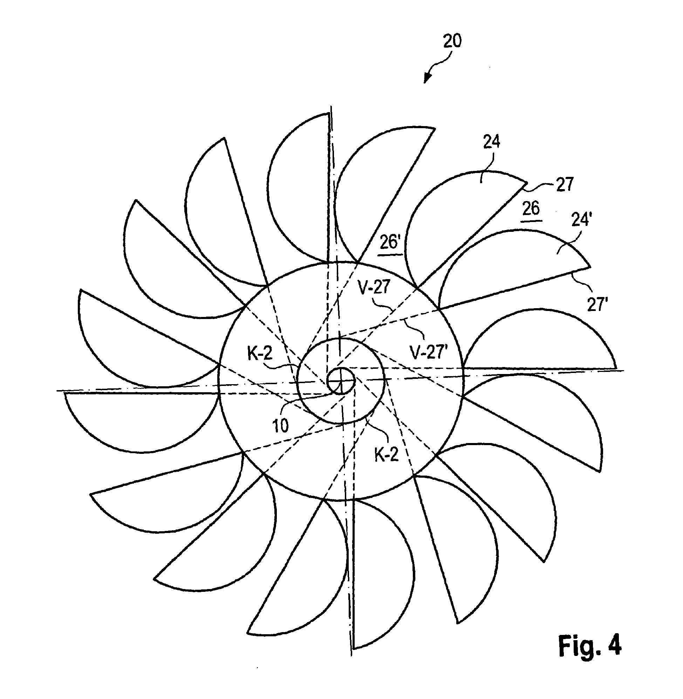

Die Figur 4 zeigt eine jeweilige Ausrichtung der umlaufenden Schaufeln 24, 24' in dem Primärrad 20, beispielsweise einem solchen, wie es in der Figur 1 dargestellt ist. Gedachte Verlängerungen V-27, V-27' der jeweiligen Vorderkanten der Schaufeln 24, 24' liegen dabei tangential an einem jeweiligen kleinen und großen Kreis K-1, K-2 um die Drehachse 10 der Maschine an, so dass sie sich vor dem Berührungspunkt mit dem jeweiligen Kreis kreuzen. Dies geschieht zwischen gegenüberliegenden Schaufelpaaren 24, 24' dergestalt, dass sich fortlaufende Schaufelräume 26, 26' mit abwechselnd engeren und weiteren Strömungsquerschnitten bilden. In den weiteren Schaufelräumen 26' herrscht bei Rotation des Primärrades 20 ein relativ niedrigerer Druck als in den engeren Schaufelräumen 26, so dass erstere mit entsprechenden Einlasskanälen 22 ausgestattet werden können.

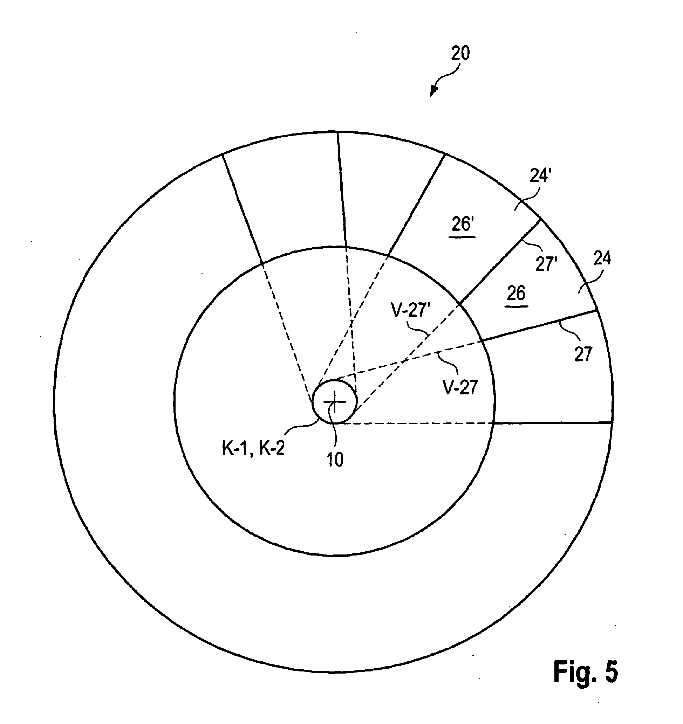

Die Figur 5 zeigt eine alternative jeweilige Ausrichtung der umlaufenden Schaufeln 24, 24' in dem Primärrad 20 der Figur 1. Dabei sind die Kreise K-1, K-2 um die Drehachse 10 gleich groß gewählt, wodurch eine besonders einfache konstruktive Ausrichtung der Schaufeln 24, 24' möglich wird. Die Verlängerungen V-27, V-27' der Vorderkanten 27, 27' benachbarter Schaufeln 24, 24' liegen tangential an einer jeweiligen Seite des Kreises K-1, K-2 an, wobei sie sich vor ihrem jeweiligen Berührungspunkt mit dem Kreis kreuzen. Der dazwischen liegende Schaufelraum 26 erfährt so einen engeren Strömungsquerschnitt, während der nachfolgende Schaufelraum 26' einen weiteren Querschnitt aufweist. Letzterer wird wiederum von einem engeren Querschnitt gefolgt usw. Auch in dieser alternativen Ausrichtung der Schaufeln 24, 24' können die engeren und damit druckärmeren Schaufelräume 26' mit entsprechenden Einlasskanälen 22 versorgt werden, um eine Zufuhr des Arbeitmediums 30 ohne zusätzliche Druckbeaufschlagung zu gewährleisten. Eine abwechselnd weite und enge Fassung der Räume 26, 26' wirkt gleichzeitig vibrationsdämpfend und damit geräuschmindernd. Gleichzeitig werden Kennliniensprünge des Rotors vermieden, auch bei einem geschraubten Profil.

Vorteilhaft kann wenigstens ein Auslasskanal, über welchen Arbeitsmedium aus der hydrodynamischen Maschine ausströmt, in einem Bereich vergleichsweise hohen Druckes münden. Dies kann beispielsweise in den vergleichsweise engeren Schaufelräumen 26 und/oder auf der jeweiligen Vorderseite, bezogen auf die Bewegungsrichtung, der Schaufeln im Primärrad oder Sekundärrad der hydrodynamischen Maschine sein.

### Bezugszeichenliste

- K-1, K-2: Kreise um Drehachse 10
- RI-24: Innenradius der Schaufel 24
- RA-24: Außenradius der Schaufel 24
- V-27, V-27': Verlängerungen der Vorderkanten 27, 27'
- 10: Drehachse der hydrodynamischen Maschine
- 11: Gehäuse der Maschine
- 12: Spaltabdichtung
- 13: Axialdichtung
- 14: Zulauf für Arbeitsmedium
- 20: Primärrad der Maschine
- 21: Torusförmiger Arbeitsraum der Maschine
- 22: Einlasskanal für Arbeitsmedium 30
- 23: Toruswand des Primärrades 20
- 24, 24': Schaufeln des Primärrades 20
- 25: Mündung des Einlasskanals 22 im Arbeitsraum 21
- 26: Schaufelraum
- 27, 27': Vorderkanten der Schaufeln 24, 24'
- 28: Rückenseitige Beschaufelung
- 29, 29': Basis der Schaufeln 24, 24'

## Patentansprüche

1. Hydrodynamische Maschine, insbesondere hydrodynamischer Retarder,
mit einem beschaufelten, über einer Drehachse (10) der hydrodynamischen Maschine rotierbaren Primärrad (20), und einem beschaufelten stationär oder über der Drehachse (10) der hydrodynamischen Maschine rotierbaren Sekundärrad, wobei
das Primärrad (20) und das Sekundärrad miteinander einen torusförmigen, mit Arbeitsmedium (30) befüllten oder befüllbaren Arbeitsraum (21) ausbilden, und
das Primärrad (20) wenigstens einen Einlasskanal (22; 22') für das Arbeitsmedium (30) aufweist, wobei
der Einlasskanal (22; 22') innerhalb der Toruswand (23) und/oder innerhalb einer Schaufel (24, 24') des Primärrades (20) verläuft und im Bereich der Mitte oder radial außerhalb der Mitte zwischen dem Außenradius (RA-24) und dem Innenradius (RI-24) der Schaufeln (24, 24') des Primärrades (20) an einer Stelle im Bereich der Toruswand (23) im Arbeitsraum (21) mündet; und
eine jeweilige Schaufel (24, 24') und/oder die Toruswand (23) des Primärrades (20) gestaltet und/oder ausgerichtet sind bzw. ist, dass wenigstens ein durch gegenüberliegende Schaufeln (24, 24') und die dazwischenliegende Toruswand (23) gebildeter Schaufelraum (26) einen Strömungsquerschnitt aufweist, der gegenüber dem Strömungsquerschnitt eines benachbarten Schaufelraums (26') enger oder weiter ist;
**dadurch gekennzeichnet, dass** der wenigstens eine Einlasskanal (22; 22') für das Arbeitsmedium (30) in einen jeweiligen Schaufelraum (26, 26') mit weitem Strömungsquerschnitt führt.

2. Hydrodynamische Maschine nach Anspruch 1, **dadurch gekennzeichnet, dass** der Einlasskanal (22; 22') im Bereich einer der Drehrichtung des Primärrades (20) abgewandten Oberfläche in der Toruswand (30) oder an einer der Drehrichtung des Primärrades (20) abgewandten Oberfläche der Schaufel (24, 24') des Primärrades (20) im Arbeitsraum (21) mündet.

3. Hydrodynamische Maschine nach Anspruch 1, bei welcher eine jeweilige Schaufel (24, 24') und/oder die Toruswand (23) des Primärrades (20) im Bereich der Mündung (25) eines Einlasskanals (22, 22') radienfrei oder radienarm ausgestaltet sind beziehungsweise ist, dass sich in diesem Bereich eine im Wesentlichen hindernisfreie, gradlinig verlaufende Strömung ausbildet.

4. Hydrodynamische Maschine nach einem der Ansprüche 1 bis 3, **dadurch gekennzeichnet, dass** in Blickrichtung der Drehachse (10) die Vorderkante (27) einer Schaufel (24) so ausgerichtet ist, dass ihre gedachte Verlängerung (V-27) tangential an einem ersten Kreis (K-1) um die Drehachse (10) anliegt, und die Vorderkante einer benachbarten Schaufel (24') so ausgerichtet ist, dass ihre gedachte Verlängerung (V-27') tangential an einem zweiten Kreis (K-2) um die Drehachse (10) anliegt, und durch Kreuzen oder nicht Kreuzen der beiden Verlängerungen (V-27, V-27') vor einem Berührungspunkt mit dem Kreis (K-1, K-2) ein Strömungsquerschnitt entsteht, der im Vergleich zu einem Strömungsquerschnitt enger oder weiter ist, der bei jeweils durch die Drehachse (10) verlaufenden Verlängerungen (V-27, V-27') entstehen würde.

5. Hydrodynamische Maschine nach Anspruch 4, **dadurch gekennzeichnet, dass** der Durchmesser des zweiten Kreises (K-2) gleich dem Durchmesser des ersten Kreises (K-1) ist und sich die beiden Verlängerungen (V-27, V-27') vor einem Berührungspunkt mit dem Kreis (K-1, K-2) kreuzen.

6. Hydrodynamische Maschine gemäß Anspruch 4, **dadurch gekennzeichnet, dass** der Durchmesser des zweiten Kreises (K-2) größer ist als der Durchmesser des ersten Kreises (K-1).

7. Hydrodynamische Maschine nach einem der Ansprüche 1 bis 6, **dadurch gekennzeichnet, dass** die in Umfangsrichtung aufeinander folgenden Schaufelräume (26, 26') abwechselnd enge und weite Strömungsquerschnitte aufweisen.

8. Hydrodynamische Maschine nach einem der vorstehenden Ansprüche, bei welcher das Primärrad (20) eine rückenseitige Beschaufelung (28) aufweist, die so gestaltet und/oder ausgerichtet ist, dass bei Rotation des Primärrades (20) ein in dessen Umgebung befindliches Arbeitsmedium (30) in Bewegung versetzt und dem wenigstens einen Einlasskanal (22; 22') zugeführt wird.

9. Hydrodynamische Maschine nach einem der vorstehenden Ansprüche, bei welcher der wenigstens eine Einlasskanal (22; 22') winklig zu der Drehachse (10) orientiert ist und insbesondere hinsichtlich seiner Arbeitsmediumführung in Radialrichtung von innen nach außen verläuft.

10. Hydrodynamische Maschine nach einem der vorstehenden Ansprüche, bei welcher der wenigstens eine Einlasskanal (22; 22') in der Basis (29) einer Schaufel (24, 24') verläuft.

11. Hydrodynamische Maschine nach einem der vorstehenden Ansprüche, **dadurch gekennzeichnet, dass** der Einlasskanal (22, 22') an einer Stelle im Arbeitsraum (21) mündet, an welcher ein durch in Drehrichtung des Primärrades (20) gegenüberliegende Schaufeln (24, 24') und die dazwischenliegende Toruswand (23) gebildeter Schaufelraum (26) einen Strömungsquerschnitt aufweist, der sich gegenüber dem Strömungsquerschnitt eines benachbarten Schaufelraums (26'), welcher insbesondere frei von einer Mündung eines Einlasskanals ist, relativ stärker erweitert.

## Claims

1. Hydrodynamic machine, in particular hydrodynamic retarder,
with a bladed primary wheel (20), which is rotatable over an axis of rotation (10) of the hydrodynamic machine, and a bladed secondary wheel which is stationarily or rotatable over the axis of rotation (10) of the hydrodynamic machine, wherein
the primary wheel (20) and the secondary wheel together form a toroidal working space (21) which is filled or can be filled with working medium (30), and
the primary wheel (20) has at least one inlet channel (22; 22') for the working medium (30), wherein
the inlet channel (22; 22') runs within the torus wall (23) and/or within a blade (24, 24') of the primary wheel (20) and opens in the region of the centre or radially outside the centre between the outer radius (RA-24) and the inner radius (RI-24) of the blades (24, 24') of the primary wheel (20) at a location in the region of the torus wall (23) in the working space (21); and
a respective blade (24, 24') and/or the torus wall (23) of the primary wheel (20) is/are configured and/or oriented so that at least one blade space (26) formed by opposing blades (24, 24') and the torus wall (23) positioned therebetween has a flow cross section which is narrower or wider in relation to the flow cross section of an adjacent blade space (26'); **characterised in that** the at least one inlet channel (22; 22') for the working medium (30) leads into a respective blade space (26, 26') having a wide flow cross section.

2. Hydrodynamic machine according to claim 1, **characterised in that** the inlet channel (22; 22') opens in the region of a surface, remote from the direction of rotation of the primary wheel (20), in the torus wall (30) or on a surface, remote from the direction of rotation of the primary wheel (20), of the blade (24; 24') of the primary wheel (20) in the working space (21).

3. Hydrodynamic machine according to claim 1, wherein a respective blade (24, 24') and/or the torus wall (23) of the primary wheel (20) is/are configured in the region of the opening (25) of an inlet channel (22, 22') so as to be radii-free or low-radii so that a substantially obstacle-free, rectilinearly running flow is formed in this region.

4. Hydrodynamic machine according to one of claims 1 to 3, **characterised in that**, in the viewing direction of the axis of rotation (10), the leading edge (27) of a blade (24) is oriented in such a way that its imaginary prolongation (V-27) rests tangentially against a first circle (K-1) around the axis of rotation (10) and the leading edge of an adjacent blade (24') is oriented in such a way that its imaginary prolongation (V-27') rests tangentially against a second circle (K-2) around the axis of rotation (10) and the intersecting or non-intersecting of the two prolongations (V-27, V-27') before a point of contact with the circle (K-1, K-2) produces a flow cross section which is narrower or wider compared to a flow cross section which would be produced in the case of prolongations (V-27, V-27') each running through the axis of rotation (10).

5. Hydrodynamic machine according to claim 4, **characterised in that** the diameter of the second circle (K-2) is equal to the diameter of the first circle (K-1) and the two prolongations (V-27, V-27') intersect before a point of contact with the circle (K-1, K-2).

6. Hydrodynamic machine according to claim 4, **characterised in that** the diameter of the second circle (K-2) is larger than the diameter of the first circle (K-1).

7. Hydrodynamic machine according to one of claims 1 to 6, **characterised in that** the blade spaces (26, 26') which follow on from one another in the circumferential direction have alternately narrow and wide flow cross sections.

8. Hydrodynamic machine according to one of the preceding claims, wherein the primary wheel (20) has a rear-side blading (28) which is configured and/or oriented in such a way that, on rotation of the primary wheel (20), a working medium (30) located in the surroundings thereof is set in motion and supplied to the at least one inlet channel (22; 22').

9. Hydrodynamic machine according to one of the preceding claims, wherein the at least one inlet channel (22; 22') is oriented at an angle to the axis of rotation (10) and in particular runs from the inside toward the outside with regard to its guiding of working medium in the radial direction.

10. Hydrodynamic machine according to one of the preceding claims, wherein the at least one inlet channel (22; 22') runs in the base (29) of a blade (24, 24').

11. Hydrodynamic machine according to one of the preceding claims, **characterised in that** the inlet channel (22, 22') opens at a location in the working space (21) at which a blade space (26) formed by opposing blades (24, 24') in the direction of rotation of the primary wheel (20) and the torus wall (23) positioned therebetween has a flow cross section which widens relatively more markedly in relation to the flow cross section of an adjacent blade space (26') which is in particular free of an opening of an inlet channel.

## Revendications

1. Machine hydrodynamique, en particulier retardateur hydrodynamique, pourvue d'une roue primaire (20) à aubes, rotative autour d'un axe de
rotation (10) de la machine hydrodynamique, et d'une roue secondaire à aubes, stationnaire ou rotative autour d'un axe de rotation (10) de la machine hydrodynamique, dans laquelle
la roue primaire (20) et la roue secondaire forment ensemble un espace de travail (21) toroïdal, rempli ou pouvant être rempli de fluide de travail (30), et la roue primaire (20) présente au moins un canal d'entrée (22; 22') pour le fluide de travail (30), dans laquelle
le canal d'entrée (22; 22') s'étend à l'intérieur de la paroi toroïdale (23) et/ou à l'intérieur d'une aube (24, 24') de la roue primaire (20) et débouche dans la zone médiane, ou radialement à l'extérieur du centre, entre le rayon externe (RA-24) et le rayon interne (RI-24) des aubes (24, 24') de la roue primaire (20) en un point donné dans la zone de la paroi toroïdale (23) dans l'espace de travail (21); et chaque aube (24, 24') correspondante et/ou la paroi toroïdale (23) de la roue primaire (20) sont conformées et/ou disposées pour qu'au moins une chambre d'aubes (26) constituée d'aubes (24, 24') opposées et de la paroi toroïdale (23) séparant lesdites aubes présente une section d'écoulement qui est plus étroite ou plus large par rapport à la section d'écoulement d'une chambre d'aubes adjacente (26'), **caractérisé en ce que** ledit au moins un canal d'entrée (22; 22') prévu pour le fluide de travail (30) conduit dans une chambre d'aubes correspondante (26, 26') avec une large section d'écoulement.

2. Machine hydrodynamique selon la revendication 1, **caractérisée en ce que** le canal d'entrée (22; 22') débouche dans l'espace de travail (21) dans la zone d'une surface tournant le dos au sens de rotation de la roue primaire (20) dans la paroi toroïdale ou bien dans une surface de l'aube (24, 24') de la roue primaire (20), laquelle surface tourne le dos au sens de rotation de la roue primaire (20).

3. Machine hydrodynamique selon la revendication 1, dans laquelle une aube correspondante (24, 24') et/ou la paroi toroïdale (23) de la roue primaire (20) sont conçues sans rayon ou avec un faible rayon dans la zone de l'embouchure (25) d'un canal d'entrée (22, 22'), pour obtenir un écoulement s'étendant de manière rectilinéaire, sensiblement sans obstacle, dans cette zone.

4. Machine hydrodynamique conformément à l'une des revendications 1 à 3, **caractérisée en ce que** le bord avant (27) d'une aube (24) dans le sens de l'axe de rotation (10) est conçu de telle sorte que son prolongement imaginaire (V-27) repose tangentiellement contre un premier cercle (K-1) autour de l'axe de rotation (10), et le bord avant d'une aube voisine (24') est conçu de telle sorte que son prolongement imaginaire (V-27') repose tangentiellement contre un second cercle (K-2) autour de l'axe de rotation (10), et une section d'écoulement apparaît par croisement ou non-croisement des deux prolongements (V-27, V-27') avant un point de contact avec le cercle (K-1, K-2), qui est plus étroit ou plus large par rapport à une section d'écoulement qui pourrait naître des prolongements (V-27, V-27') respectifs passant par l'axe de rotation (10).

5. Machine hydrodynamique selon la revendication 4, **caractérisée en ce que** le diamètre du second cercle (K-2) est égal au diamètre du premier cercle (K-1)et que les deux prolongements (V-27, V-27') coupent le cercle (K-1, K-2) avant un point de contact.

6. Machine hydrodynamique selon la revendication 5, **caractérisée en ce que** le diamètre du second cercle (K-2) est supérieur au diamètre du premier cercle (K-1).

7. Machine hydrodynamique conformément à l'une des revendications 1 à 6, **caractérisée en ce que** les chambres d'aubes (26, 26') successives dans le sens de la circonférence présentent des sections d'écoulement alternativement étroites et larges.

8. Machine hydrodynamique selon l'une des revendications précédentes, dans laquelle la roue primaire (20) présente un aubage dorsal (28), conçu et/ou agencé de telle sorte que pendant la rotation de la roue primaire (20) un fluide de travail (30) situé dans l'environnement de ladite roue primaire est mis en mouvementet et acheminé vers au moins un canal d'entrée (22; 22').

9. Machine hydrodynamique selon l'une des revendications précédentes, dans laquelle ledit au moins un canal d'entrée (22; 22') est orienté de façon angulaire par rapport à l'axe de rotation (10) et s'étend de l'intérieur vers l'extérieur en particulier en ce qui concerne l'acheminement du fluide de travail dans la direction radiale.

10. Machine hydrodynamique selon l'une des revendications précédentes, dans laquelle ledit au moins un canal d'entrée (22; 22') s'étend dans la base (29) d'une aube (24, 24').

11. Machine hydrodynamique selon l'une des revendications précédentes, **caractérisée en ce que** le canal d'entrée (22; 22') débouche en un point donné dans l'espace de travail (21) au niveau duquel une chambre d'aubes (26) constituée, dans le sens de rotation de la roue primaire (20), d'aubes opposées (24, 24') et de la paroi toroïdale (23) séparant lesdites aubes présente une section d'écoulement qui s'élargit davantage par rapport à la section d'écoulement d'une chambre d'aubes adjacente (26'), qui en particulier ne comporte pas d'embouchure de canal d'entrée.
